# DEMANDE DE BREVET EUROPEEN

(11) **EP 1 872 939 A2**
(43) Date de publication de la demande: **02.01.2008**
(21) Numéro de dépôt: 07290778.5
(22) Date de dépôt: 22.06.2007
(51) Int. Cl.: B32B 27/12, B62D 25/20, B29C 51/14

(54) **Faux plancher comprenant un non-tissé et une couche d'aspect et son procédé de fabrication**

(30) Priorité: 28.06.2006 FR 0605821
(71) Demandeur: Faurecia Automotive Industrie, 92000 Nanterre (FR)
(72) Inventeur: Marcel, Valérie, 55150 Brandeville (FR)
(74) Mandataire: Arnaud, Jean

(57) **Abrégé**

L'invention concerne un faux plancher et son procédé de fabrication. Le faux plancher comprend une couche de non-tissé (30) et une couche d'aspect. Le procédé comprend la sélection d'un non-tissé (30) qui peut être thermoformé, et le thermoformage du non-tissé (30), la sélection d'une couche d'aspect (32) qui peut être thermoformée, et le thermoformage de la couche d'aspect, et l'association du non-tissé (30) et de la couche d'aspect. Selon l'invention, la sélection de la couche d'aspect comprend la sélection d'un complexe (32) comprenant une couche de revêtement (34) et une couche de masse lourde (36), et les opérations de thermoformage et d'association de la couche d'aspect et de la couche de non-tissé (30) et leur association sont effectuées simultanément dans un seul moule. Application aux faux planchers avant des automobiles.

## Description

La présente invention concerne un faux plancher de véhicule automobile, et son procédé de fabrication.

On sait déjà réaliser des faux planchers structurants en un non-tissé thermoformé, présentant en surface une couche continue et lavable de revêtement constituée d'une matière thermoplastique. Pour que cette surface soit antidérapante, elle possède un grainage profond (c'est-à-dire présentant des dénivelés de plusieurs dixièmes de millimètre), au moins dans des parties destinées à être au contact des pieds.

La couche de matière thermoplastique doit être suffisamment épaisse pour permettre le grainage profond dans une opération de thermoformage. En conséquence, la fabrication de tels faux planchers structurants comprend habituellement le thermoformage de la matière thermoplastique de la couche de revêtement, et le thermoformage du non-tissé, puis leur association dans un procédé en trois étapes. Un tel procédé est coûteux à cause du grand nombre d'étapes.

On sait aussi réaliser en une seule étape le thermoformage et l'association d'un non-tissé destiné à former un élément structurant avec un tapis textile enduit d'une colle. Ce procédé a l'inconvénient de tout procédé de collage, et il ne donne pas un faux plancher ayant une couche de revêtement de matière thermoplastique continue.

Le document FR-2 873 618 décrit un matériau multicouche qui comprend une couche de surface, une couche intermédiaire et une couche inférieure de support. Dans un exemple de ce document, la couche qui constitue l'élément de support peut être considérée comme "masse lourde", et elle est associée à une couche intermédiaire et une couche d'aspect qui ne donnent pas "d'effet ressort". L'ensemble ne constitue pas un dispositif d'insonorisation de type "masse-ressort". En particulier, le document FR-2 873 618 ne décrit ni ne suggère un faux plancher de véhicule automobile dans lequel une couche de masse lourde est liée à un non-tissé par pénétration du matériau de la couche de masse lourde dans la partie superficielle du non-tissé. Le matériau décrit dans ce document est formé par extrusion simultanée.

Il serait souhaitable de réaliser un faux plancher structurant constitué d'un non-tissé thermoformé portant un revêtement d'une matière thermoplastique non textile par un procédé moins coûteux que le procédé précité en trois étapes, par exemple ayant un nombre d'étapes plus réduit.

Il n'est pas possible en pratique de thermoformer une couche d'un non-tissé et une couche d'une matière thermoplastique de revêtement directement dans un moule, par chauffage du non-tissé et de la couche de matière thermoplastique et par mise en forme dans un moule, parce que la matière thermoplastique a une inertie thermique trop faible : lorsqu'elle est chauffée à l'extérieur du moule, par exemple par chauffage infrarouge, puis est introduite dans le moule, elle n'a plus une température suffisante dans le moule pour subir un thermoformage suffisant pour créer un grainage profond, tout en étant liée au non-tissé.

L'invention concerne la solution de ce problème. Selon l'invention, la couche de matière thermoplastique destinée à former la surface extérieure, avantageusement grainée, est munie d'une couche de masse lourde destinée à former l'interface entre la matière thermoplastique et le non-tissé.

Un tel complexe formé d'une couche de matière thermoplastique et d'une couche de masse lourde constitue une couche d'aspect dont l'inertie thermique est suffisante pour qu'elle puisse être chauffé à l'extérieur du moule, placée dans le moule avec le non-tissé chauffé, et thermoformée simultanément avec le non-tissé en une seule étape dans un moule, dans des conditions de température qui suffisent au grainage profond.

L'utilisation d'une telle couche de masse lourde est bien connue dans le domaine de l'isolation acoustique de la cloison disposée entre le compartiment moteur et l'habitacle d'une automobile, et cette couche est habituellement formée d'une matière thermoplastique, telle qu'une polyoléfine, d'un élastomère et d'une charge.

La couche d'aspect qui comprend la couche de revêtement et la couche de masse lourde est plus coûteuse que la simple couche de revêtement de matière thermoplastique. Cependant, comme une couche de masse lourde est normalement utilisée pour l'insonorisation au niveau de la cloison disposée entre l'habitacle et le compartiment moteur, la couche de masse lourde du complexe du faux plancher peut remplir partiellement la fonction de la couche de masse lourde d'insonorisation qui peut alors avoir des caractéristiques réduites de manière correspondante.

La couche de masse lourde permet une très bonne adhérence entre la couche de matière thermoplastique de revêtement et le non-tissé, sans utilisation de colle. En outre, le faux plancher a un bel aspect, et, par exemple, il peut être grainé.

Plus précisément, l'invention concerne un faux plancher de véhicule automobile, qui comprend un non-tissé thermoformé, une couche de masse lourde liée au non-tissé par pénétration du matériau de la couche de masse lourde dans la partie superficielle du non-tissé, et une couche d'une matière thermoplastique.

De préférence, la couche de masse lourde contient une polyoléfine, un élastomère et une charge. Par exemple, la polyoléfine est le polypropylène ou le polyéthylène, ou un copolymère d'éthylène et d'acétate de vinyle.

De préférence, la matière thermoplastique de la couche de revêtement est choisie parmi le chlorure de polyvinyle et les polyoléfines.

De préférence, le non-tissé est un non-tissé formé par des quantités pondérales pratiquement égales de fibres d'un polymère thermoplastique et de fibres de verre.

L'invention concerne aussi un procédé de fabrication d'un faux plancher, comprenant une couche de non-tissé et une couche d'aspect, du type qui comprend la sélection d'un non-tissé qui peut être thermoformé, et le thermoformage du non-tissé, la sélection d'une couche d'aspect qui peut être thermoformée, et le thermoformage de la couche d'aspect, et l'association du non-tissé et de la couche d'aspect ; selon l'invention, la sélection de la couche d'aspect comprend la sélection d'un complexe comprenant une couche de revêtement et une couche de masse lourde, et les opérations de thermoformage et d'association de la couche d'aspect et de la couche de non-tissé sont effectuées simultanément dans un seul moule.

De préférence, le procédé comprend en outre le chauffage de la couche d'aspect, et le chauffage de la couche de non-tissé. Les opérations de chauffage sont avantageusement effectuées en dehors du moule.

Dans un mode d'exécution, le moule du côté de la couche du revêtement a un grain, et l'étape de thermoformage assure aussi un grainage de la matière thermoplastique de la couche de revêtement.

De préférence, l'étape de thermoformage est exécutée à une pression suffisante pour que le matériau de la couche de masse lourde pénètre dans la partie superficielle du non-tissé.

Dans le présent mémoire, l'expression "couche de masse lourde" s'applique à toutes les couches de matériaux normalement utilisés pour la formation de systèmes insonorisants de type masse-ressort, ces couches étant étanches à l'air, de masse volumique au moins égale à 1 kg/m3, et de préférence viscoélastiques.

D'autres caractéristiques et avantages de l'invention seront mieux compris à la lecture de la description qui va suivre d'un exemple de réalisation, faite en référence aux dessin annexé sur lequel :
la figure 1 est une vue en perspective d'un exemple de faux plancher, permettant de préciser les conditions du problème posé ;
la figure 2 est une coupe schématique illustrant la mise en oeuvre du procédé de l'invention ; et
la figure 3 est une coupe schématique indiquant la disposition des diverses couches d'un faux plancher selon l'invention.

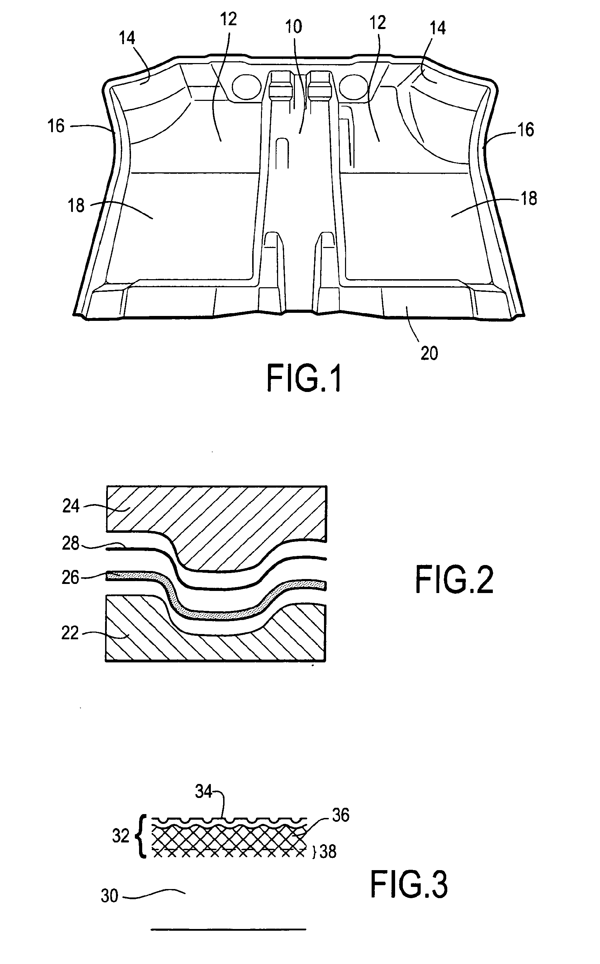

La figure 1 est une vue en perspective d'un faux plancher placé dans une automobile en avant des sièges avant, entre la cloison formée entre le compartiment moteur et l'habitacle et une partie se trouvant au-dessous des sièges avant.

Le faux plancher comporte une partie centrale 10 en saillie, destinée à loger divers éléments mécaniques et, de chaque côté, deux cavités 12 appelées "caves à pieds", sur lesquelles reposent les pieds des passagers. Le faux plancher comprend une partie de paroi ascendante 14 à l'avant, contre la cloison formée entre le compartiment moteur et l'habitacle, et des parties de paroi latérale 16, notamment au niveau de parties sensiblement plates 18 formant le fond horizontal de chaque support de pieds. Une partie arrière 20 est destinée au raccordement au reste du plancher de l'habitacle.

Ce faux plancher doit posséder une bonne résistance mécanique, puisqu'il supporte le poids des passagers avant, et il doit former un ensemble qui peut être facilement nettoyé, et notamment lavé.

Dans les parties destinées à être au contact de pieds au moins, un revêtement de sol, par exemple une moquette, peut être ajouté sous forme fixe ou amovible. Cependant, il est avantageux que la surface apparente du faux plancher, ou une partie seulement de celle-ci, soit grainée, essentiellement pour des raisons d'aspect et de tenue d'un revêtement de sol.

L'invention concerne de tels faux planchers dont la partie structurante est formée d'un non-tissé de matière thermoplastique qui est thermoformé. Bien qu'on puisse utiliser divers non-tissés, notamment à base de chlorure de polyvinyle, de polyoléfine, etc., éventuellement associés à d'autres fibres, par exemple de chanvre ou de coton, on considère dans l'exemple qui suit que le non-tissé est formé, en quantités pondérales pratiquement égales, par des fibres d'une matière thermoplastique, avantageusement d'une polyoléfine telle que le polyéthylène ou le polypropylène, et des fibres de verre.

La réalisation du faux plancher comprend donc la disposition d'une couche continue d'une matière plastique rigide du côté du non-tissé qui doit être visible dans l'habitacle. Selon l'invention, le problème posé par la trop faible inertie thermique d'une mince couche de matière thermoplastique (ayant une épaisseur de l'ordre de 1 à 2 mm par exemple) est résolu par utilisation d'une couche d'aspect qui est constituée d'un complexe comprenant non seulement une couche de matière thermoplastique de faible inertie thermique, mais aussi une couche de masse lourde ayant pour fonctions d'augmenter l'inertie thermique de la couche d'aspect, d'assurer la liaison entre la couche de matière thermoplastique et le non-tissé, et de donner de bonnes propriétés d'insonorisation.

La figure 2 illustre le procédé de fabrication d'un tel faux plancher. Sur la figure 2, entre les deux parties 22, 24 d'un moule ayant une forme complémentaire de celle du faux plancher sont disposées une couche 26 de non-tissé, qui vient juste d'être chauffée, par exemple dans un four à circulation d'air chaud, et une couche d'un complexe matière thermoplastique-masse lourde 28, qui vient juste d'être chauffée par exemple par chauffage infrarouge. La couche de masse lourde est tournée vers le non-tissé.

Dans ce procédé, le non-tissé 26 et le complexe 28 sont chauffés séparément et, lorsqu'ils sont à une température convenable, ils sont introduits rapidement entre les deux parties de moule 22 et 24, puis le moule est fermé. Dans cette opération unique, le non-tissé 26 et le complexe 28 sont thermoformés et simultanément associés.

Plus précisément, comme l'indique la figure 3, dans le faux plancher ainsi réalisé, la couche du non-tissé 30 est couverte par le complexe 32 qui comprend la couche extérieure 36 de matière thermoplastique, par exemple de polyoléfine, représentée avec un grain, et la couche de masse lourde 36, constituée d'une matière thermoplastique, telle qu'une polyoléfine, d'un élastomère et d'une charge, le matériau de cette couche de masse lourde pénétrant dans la partie superficielle 38 du non-tissé 30.

Il apparaît, sur une coupe du faux plancher représentée sur la figure 3, que l'association du non-tissé et du complexe est assurée par la pénétration superficielle du matériau de la couche de masse lourde qui contient un élastomère.

Grâce à l'inertie thermique donnée au complexe par la couche de masse lourde, il est possible de donner à la couche de matière thermoplastique d'aspect 34 un grain profond, par exemple ayant une profondeur de plusieurs dixièmes de millimètre, dans l'opération unique de thermoformage.

Sur la figure 3, on note que le non-tissé forme plus de la moitié de l'épaisseur du faux plancher. Par contre, le complexe a un poids supérieur à celui du non-tissé, à cause de la présence de masse lourde. Dans un exemple, le non-tissé a un poids de 1,2 kg/m², alors que le complexe a un poids de 2 kg/m².

Ainsi, l'invention concerne non seulement un faux plancher et un procédé de fabrication du faux plancher, mais aussi une nouvelle conception de la réalisation de la partie avant de l'habitacle des automobiles, selon laquelle une partie de la masse d'insonorisation, destinée à l'isolation acoustique, est déplacée de la cloison disposée entre le compartiment moteur et l'habitacle, vers le faux plancher.

## Revendications

1. Faux plancher de véhicule automobile, **caractérisé en ce qu'**il comprend un non-tissé thermoformé (30), une couche de masse lourde (36) liée au non-tissé (30) par pénétration du matériau de la couche de masse lourde (36) dans la partie superficielle du non-tissé (30), et une couche de revêtement (34) d'une matière thermoplastique.

2. Faux plancher selon la revendication 1, **caractérisé en ce que** la couche de masse lourde (36) contient une polyoléfine, un élastomère et une charge.

3. Faux plancher selon la revendication 2, **caractérisé en ce que** la polyoléfine est le polyéthylène.

4. Faux plancher selon l'une quelconque des revendications précédentes, **caractérisé en ce que** la matière thermoplastique de la couche de revêtement (34) est choisie parmi le chlorure de polyvinyle et les polyoléfines.

5. Faux plancher selon l'une quelconque des revendications précédentes, **caractérisé en ce que** le non-tissé (30) est un non-tissé formé par des quantités pondérales pratiquement égales de fibres d'un polymère thermoplastique et de fibres de verre.

6. Procédé de fabrication d'un faux plancher, comprenant une couche de non-tissé (30) et une couche d'aspect, du type qui comprend
la sélection d'un non-tissé (30) qui peut être thermoformé, et le thermoformage du non-tissé (30),
la sélection d'une couche d'aspect (32) qui peut être thermoformée, et le thermoformage de la couche d'aspect, et
l'association du non-tissé (30) et de la couche d'aspect,
**caractérisé en ce que**
la sélection de la couche d'aspect comprend la sélection d'un complexe (32) comprenant une couche de revêtement (34) et une couche de masse lourde (36), et
les opérations de thermoformage et d'association de la couche d'aspect et de la couche de non-tissé (30) sont effectuées simultanément dans un seul moule.

7. Procédé selon la revendication 6, **caractérisé en ce qu'**il comprend en outre le chauffage de la couche d'aspect, et le chauffage de la couche de non-tissé (30).

8. Procédé selon la revendication 7, **caractérisé en ce que** les opérations de chauffage sont effectuées en dehors du moule.

9. Procédé selon l'une quelconque des revendications 6 à 8, **caractérisé en ce que** le moule du côté de la couche du revêtement (34) a un grain, et l'étape de thermoformage assure aussi un grainage de la matière thermoplastique de la couche de revêtement (34).

10. Procédé selon l'une quelconque des revendications 6 à 9, **caractérisé en ce que** l'étape de thermoformage est exécutée à une pression suffisante pour que le matériau de la couche de masse lourde (36) pénètre dans la partie superficielle du non-tissé (30).
